Europäisches Patentamt

European Patent Office

Office européen des brevets

(11) Publication number: **0 200 176 B1**

# EUROPEAN PATENT SPECIFICATION

(45) Date of publication of patent specification: **05.08.92**  (51) Int. Cl.5: **C01G 25/00**

(21) Application number: **86105770.1**

(22) Date of filing: **25.04.86**

(54) Method for producing fine particles of lead zirconate.

(30) Priority: **26.04.85 JP 90705/85**

(43) Date of publication of application:
**10.12.86 Bulletin 86/45**

(45) Publication of the grant of the patent:
**05.08.92 Bulletin 92/32**

(84) Designated Contracting States:
**DE FR GB NL**

(56) References cited:
**EP-A- 0 112 159**
**EP-A- 0 130 086**

(73) Proprietor: **SONY CORPORATION**
**7-35 Kitashinagawa 6-chome Shinagawa-ku Tokyo 141(JP)**

(72) Inventor: **Uedaira, Satoru c/o Sony Corporation**
**6-7-35 Kitashinagawa Shinagawa-ku Tokyo(JP)**
Inventor: **Yamanoi, Hiroshi c/o Sony Corporation**
**6-7-35 Kitashinagawa Shinagawa-ku Tokyo(JP)**
Inventor: **The other inventors have agreed to waive their entitlement to designation**

(74) Representative: **TER MEER - MÜLLER - STEINMEISTER & PARTNER**
**Mauerkircherstrasse 45**
**W-8000 München 80(DE)**

## Description

## BACKGROUND OF THE INVENTION

### Field of the Invention

The present invention is directed to a method for producing a fine powder of lead zirconate which comprises preparing an aqueous solution containing a hydrolysis product of a zirconium compound or a water-soluble zirconium salt.

### Description of the Prior Art

In recent years, progress has been made in designing ceramics as functional articles such as electronic materials used in capacitors or as electrostrictive materials. The nature of the starting materials markedly affects the subsequent moldability, calcinability and the characteristics of the final product. Consequently, more and more emphasis is laid on the method of synthesis and the characteristics of the starting powder material. Above all, there is a need for a ferroelectric material having a small and uniform particle size.

For example, in a multilayer ceramic capacitor it is necessary to reduce the thickness of the ceramic layer with a view toward increasing the capacity and reducing the size and weight of the capacitor. For this purpose, comminution of the starting ferroelectric material has become a more critical factor. Such comminution is believed useful in improving calcinability and temperature characteristics of the electrostrictive, piezoelectric and transparent ceramic materials. Also, from the standpoint of withstanding voltage in the capacitors, the growth of particles of an unusual particle size or the presence of a non-uniform particle size is not desirable and so there is a need for developing a method for synthesis of fine particles of uniform particle size.

Lead zirconate, $PbZrO_3$, has become widely used as an antiferroelectric material because of its various excellent properties.

Fine particles of lead zirconate were formerly prepared by what is known as a solid phase reaction process according to which lead carbonate, $PbCO_3$, or lead oxide, PbO, and zirconium oxide, $ZrO_2$, are mixed and crushed together in a ball mill, preliminarily calcined at a higher temperature of 1200°C and again crushed in a ball mill until the particle size becomes uniform. The resulting material is then calcined to its final form.

In the synthesis of fine particles of lead zirconate in this manner, evaporation of lead oxide, PbO, presents a serious problem. With the increase in temperature employed for preliminary calcination, the amount of PbO evaporation is increased exponentially, thus causing changes in the composition of the resulting lead zirconate particles. Microscopically, fluctuations in the composition may be caused to exist from particle to particle. In order to avoid this, it is necessary to perform a precise control during heat treatment such as performing a calcination under a PbO atmosphere. While it may be desired to reduce the PbO evaporation by lowering the temperature of the preliminary calcination preceding the final calcination, a larger amount of the unreacted PbO is left at the time of termination of the preliminary calcination so that it is again necessary to effect an atmosphere control in order to prevent the unreacted PbO from becoming vaporized at the time of the final calcination.

In general, the fine particles of lead zirconate obtained by the conventional solid phase reaction have a non-uniform particle size distribution and are not completely free from admixture with coarse particles. In addition, a heat treatment step is required in the process so that metal oxides and the like are necessarily included as impurities thus causing difficulties in the manufacture of high purity lead zirconate particles.

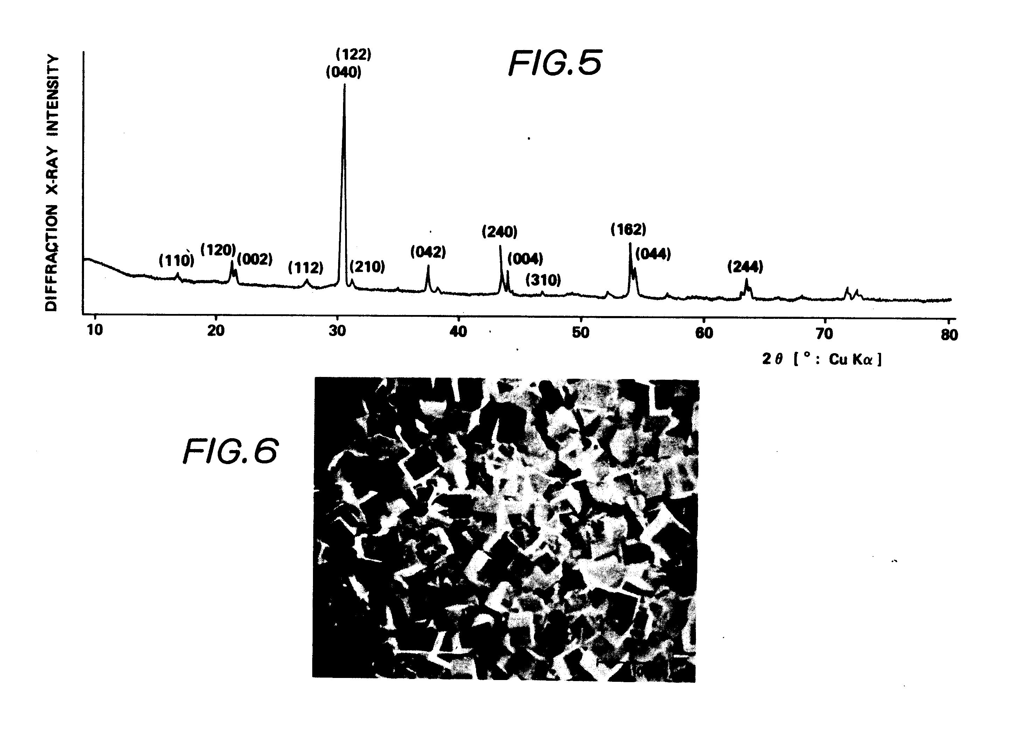

EP-A-0 112 159 discloses a method of manufacturing a fine powder of barium zirconate which comprises the steps of hydrolysing a zirconium compound an reacting the hydrolized compound with a water-soluble barium compound in an aqueous alkaline solution having a pH of not lower than 13.6. From Fig. 6 it can be taken that the synthesis reaches 100% at 100°C and from Fig. 7 it can be taken that the amount of the product decreases as the reaction time increases above 7 hours.

Soviet Inventions Illustrated, Chemical Section, week E25, August 4, 1982, Derwent Publications, Ltd., SU-859-306 (Mobil Finishes Co.) discloses the manufacture of lead zirconate crystals by treating zirconium hydroxide with a lead salt solution in the presence of urea and firing of the precipitate.

### Summary of the invention

In view of the foregoing, the present invention seeks to provide a method for producing a fine powder of lead zirconate having an extremely small particle size and a uniform particle size distribution without the necessity of performing a special heat treatment and providing said fine particles free from admixture with impurities, such as metal oxides, under conditions of higher productivity and with the use of simplified apparatus.

Subject matter of the present invention therefore is a method for producing a fine powder of lead zirconate which comprises preparing an aqueous solution containing a hydrolysis product of a zirconium compound or a water-soluble zirconium salt, which is characterized by reacting said aqueous solution with a water-soluble lead compound in an aqueous alkaline solution having a pH between 13.5 and 14.4 in an autoclave at a reaction temperature of at least $175°C$ to produce a precipitate, and filtering and washing the resulting precipitate.

**Description of the preferred embodiments**

According to a preferred embodiment of the above method, the reaction temperature is at least $200°C$.

According to a further preferred embodiment of the invention the molecular ratio of lead to zirconium in said solution is between 0.7 and 2.0 and more preferably between 1.0 and 1.7.

In manufacturing fine particles of lead zirconate in accordance with the present invention, the hydrolysis product of a zirconium compound or a water-soluble zirconium salt and the hydrolysis product of a water-soluble lead compound or a water-soluble salt thereof are mixed together and wet reacted in an alkaline aqueous solution at a temperature of at least $175°C$, thereby precipitating lead zirconate. The resulting precipitate is washed in cold or lukewarm water for removing completely alkaline cations such as $K^+$, $Na^+$ or $Li^+$ or anions such as $Cl^-$. The refined precipitates may then be filtered and dried to produce the final product.

The hydrolysis products of the zirconium compounds or the water-soluble zirconium salts may include zirconium chloride, $ZrCl_4$, oxyacid zirconium, $ZrOCl_2 \cdot 8H_2O$, zirconium hydroxide, $Zr(OH)_4$, zirconium oxynitrate or zirconyl nitrate, $ZrO(NO_3)_2 \cdot 2H_2O$, or zirconium hydroxyacetate, $ZrO(CH_3COO)_2$.

The water-soluble lead compounds may include lead acetate, $Pb(CH_3COO)_2 \cdot 3H_2O$, lead nitrate, $Pb(NO_3)_2$, and lead chloride, $PbCl_2$. In the case of using lead chloride, it is preferable to treat the chloride in advance with alkaline hot water.

For causing the reaction to take place at an elevated temperature, an autoclave must be used. The inner vessel of this pressure vessel is preferably formed of a material capable of withstanding a highly alkaline environment and higher temperatures such, for example, as polytetrafluoroethylene ("Teflon") or platinum.

In accordance with the present invention, the pH value of the aqueous solution at the time of reaction and the reaction temperatures are of prime importance. By setting the pH value to the range of 13.5 to 14.4 and the reaction temperature to be at least as high as $175°C$, fine particles of lead zirconate can be obtained as single-phase crystals.

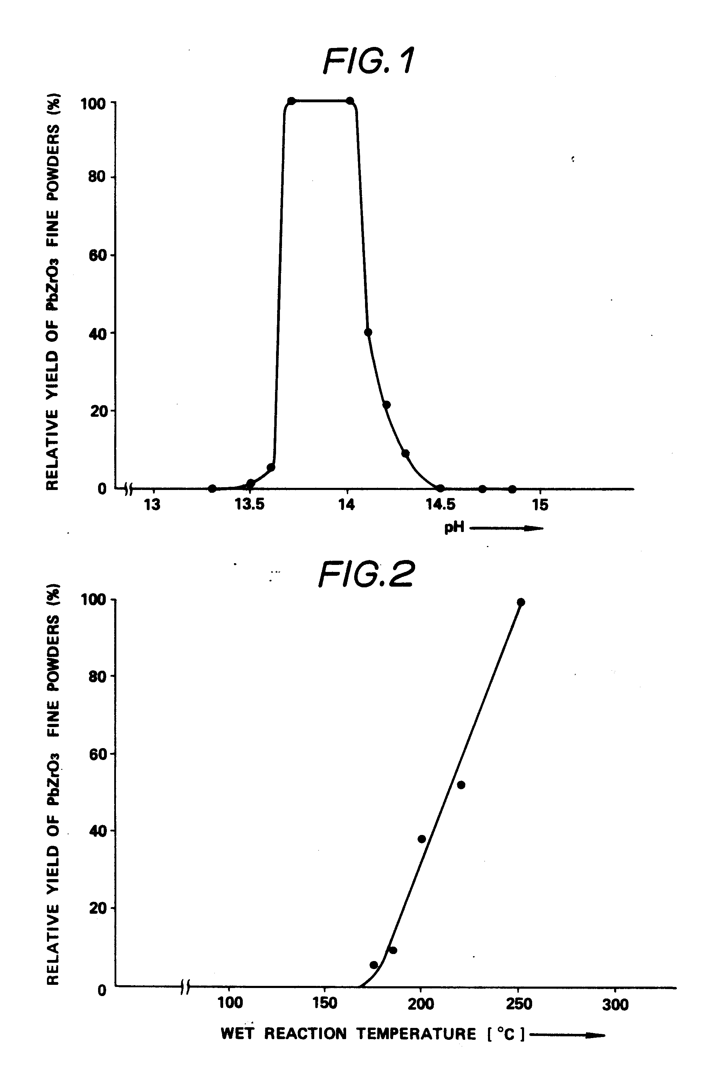

Our experiments have shown that with the pH value of the aqueous solution in the wet reaction lower than 13.4 or higher than 14.5, the resulting fine particles of lead zirconate are in the amorphous state. For example, the starting materials were wet reacted in an autoclave at a reaction temperature of $250°C$ for three hours with the Pb/Zr molar ratio of the starting materials at unity and with the use of various pH values of the aqueous solution. The above-noted reaction time of three hours does not include the time necessary to raise or lower the temperature to and from $250°C$. After the termination of the wet reaction, the reaction product was filtered and dried to produce fine particles of lead zirconate and the relative yield of the resulting fine particles of lead zirconate was measured. The results are shown in FIG. 1. The relative yield of the fine particles of lead zirconate was determined from the sum of the peak areas of the X-ray diffraction curve corresponding to the Miller indices 040 and 122 of the lead zirconate crystals, wherein the curve was obtained with the use of a copper target and a nickel filter. This definition of relative yield is employed throughout the present specification. From FIG. 1, it has been confirmed that the fine particles of lead zirconate can be obtained as single-phase crystals and with a higher yield.

In the above-described wet reaction, a reaction temperature of at least $175°C$ should be used. For example, at a pH value of 14.0 and a Pb/Zr molar ratio of 1, using various reaction temperatures, the starting materials were subjected to a wet reaction in an autoclave for eight hours, filtered, and dried to fine particles of lead zirconate. The relative yield of these particles was measured and the results are shown in FIG. 2.

From this Figure it will be seen that the yield is increased with rise in the reaction temperature. It has been confirmed that crystallization may start to occur at temperatures higher than $175°C$ and so a more preferred temperature is at least $200°C$.

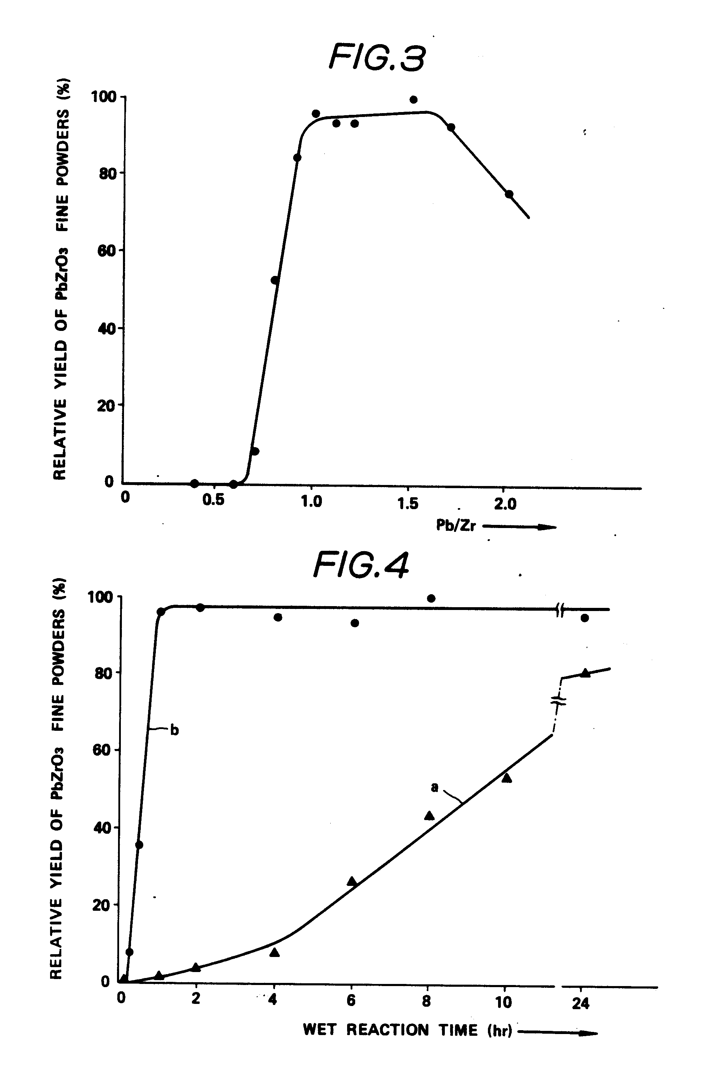

In the above wet reaction, the Pb/Zr molar ratio is in the range from 0.7 to 2.0. With the pH value set at 14.0 and with the use of various Pb/Zr molar ratios, the starting materials were subjected to a wet reaction in an autoclave for eight hours at a reaction temperature of 250°C, filtered, and dried to produce fine particles of lead zirconate. The relative yield of these particles was measured and the results are shown in FIG. 3. From this Figure, it can be seen that the fine particles of lead zirconate may be produced for Pb/Zr molar ratios in the range of 0.7 to 2.0 as single-phase crystals and with a higher yield, and that the yield reaches a maximum for a Pb/Zr molar ratio in the range from 1.0 to 1.7.

In the above wet reaction, with the use of various reaction times and with the Pb/Zr ratio and the pH value set to unity and 14.0, respectively, the starting materials were subjected to a wet reaction in an autoclave with a reaction temperature of 220°C and 250°C. The reaction product thus obtained was filtered and dried to fine particles of lead zirconate. FIG. 4 shows the results of the relative yield of these particles. In FIG. 4, the curve a stands for the relative yield at a reaction temperature of 220°C and curve b for the same relative yield with a reaction temperature of 250°C. It may be seen from this Figure that the yield depends on the reaction time and will increase with increase in the reaction time. With a reaction temperature equal to 250°C, the relative yield will be approximately constant at more than 95% by using a reaction time of more than one hour.

According to the present invention, the hydrolysis product of the zirconium compound or the water-soluble zirconium salt and the water-soluble lead compound are wet reacted in an aqueous solution under conditions of pH of 13.5 to 14.4 and at a temperature of at least 175°C to produce fine particles of lead zirconate in such a manner that particles of small particle size and uniform particle size distribution are obtained. Improved electronic materials such as electrostrictive, piezoelectric or transparent materials result because of the small particle size and uniform particle size distribution.

Since the resulting fine particles are crystal grains of minute crystal size, any heat treatment steps may be dispensed with while the final particles are free from inclusion of impurities such as metal oxides. In addition, heating devices may be dispensed with for reducing manufacturing time and elevating the productivity.

The present invention will be illustrated by reference to specific examples which are provided for illustration only and are not intended to limit the scope of the present invention.

Example 1

50 g of zirconium chloride were added dropwise to 100 ml of ice water in two to three minutes to give an aqueous solution of zirconium chloride. About 200 g of an aqueous solution of potassium hydroxide were added to the zirconium chloride solution to give a liquid suspension, enough potassium hydroxide being added to adjust the pH value to about 7. Then water was further added to the resulting mixture to give a total volume of 500 ml.

50 ml of the liquid suspension was sampled and added to 8.14 g of lead acetate $Pb(CH_3COO)_2 \cdot 3H_2O$, potassium hydroxide and water in that order to give a total volume of 100 ml. The pH value of the resulting aqueous solution was 14.0.

This aqueous solution was reacted at 250°C for five hours under agitation in a hermetically closed autoclave type reaction vessel. After termination of the reaction, the resulting white precipitates were subjected to repeated decantation in order to effect removal of impurities such as alkali ions. The resulting product was filtered, washed with water and dried overnight at 100°C.

The fine particles obtained by the above described process were analyzed by X-ray diffraction. The results are shown in FIG. 5. From the coincidence of the diffraction pattern of FIG. 5 with the ASTM card 20-608, these particles were identified as lead zirconate particles of the orthorhombic phase. A photograph of these fine particles of lead zirconate taken with a scanning electron microscope is shown in FIG. 6.

The lattice constant was determined from the X-ray diffraction data of a sample subjected to wet reaction at 250°C for five hours. The fine particles of lead zirconate thus obtained were found to be crystals of the orthorhombic series with $a_0 = 0.5882 \mu m$ (5.882 Å), $b_0 = 1.177 \mu m$ (11.77 Å) and $C_0 = 0.8232 \mu m$ (8.232 Å).

Example 2

Pure water was added dropwise in two to three minutes to 50 g of zirconium chloride previously charged into a beaker to produce an aqueous solution of zirconium chloride. To this aqueous solution were added 40 g of potassium hydroxide to produce a white liquid suspension which was then combined with an aqueous solution of potassium hydroxide to give a pH value of 7 and also combined with water to give a total volume of 500 ml.

To a 50 ml fraction of the solution were added 12.21 g of lead acetate, $Pb(CH_3COO)_2 \cdot 3H_2O$. To the resulting solution were added an aqueous solution of potassium hydroxide and water in that order to give a volume of 100 ml. The pH value of the resulting aqueous solution was equal to 14.0.

The aqueous solution was then allowed to react at 250°C for three hours under agitation in a hermetically closed autoclave type reaction vessel. After termination of the reaction, the resulting white precipitates were subjected to repeated decantation to remove impurities such as alkali ions. The resulting product was filtered, washed with water and dried overnight at 90°C.

Upon X-ray analysis, the diffraction pattern of the resulting fine particles was found to be the same as that of the fine particles of lead zirconate shown in FIG. 5. The SEM photo of these particles revealed that the particles were crystals similar in size and shape to those shown in FIG. 6. Hence, the particles were identified as lead zirconate of the orthorhombic series.

Example 3

50 g of zirconium chloride were dissolved in two to three minutes in 100 ml of ice water to give an aqueous solution of zirconium chloride. To this aqueous solution was added concentrated ammonia water to give a white precipitate to which additional ammonia water was added to provide a pH value of 8. Water was further added to a volume of 500 ml.

To a 50 ml fraction of this solution were added 7.11 g of lead nitrate and the combination of the ammonia solution and water to give a total volume of 100 ml. The pH value of the aqueous solution was 13.7.

The resulting aqueous solution was reacted in a hermetically sealed autoclave type reaction vessel under agitation for one hour and at a temperature of 250°C. The white precipitates obtained after the termination of the reaction were subjected to repeated decantation to remove impurities such as alkali ions. The refined product was filtered, washed with water and dried overnight at 90°C.

The fine particles obtained by the above described sequence of operations were analyzed by X-ray diffraction. It was found that their diffraction pattern was the same as the diffraction pattern of the fine particles of lead zirconate shown in FIG. 5. From the SEM photo, the fine particles obtained by the above operations were found to be similar in size and shape to the crystals shown in FIG. 6. Hence, these fine particles were found to be lead titanate of the orthorhombic series.

Example 4

To 50 g of zirconium chloride in a beaker were added 100 ml of water in two to three minutes dropwise to give an aqueous solution of zirconium chloride. About 200 ml of a 30 g NaOH solution were added to this aqueous solution to give a white liquid suspension to which 85.28 g of lead nitrate and a sufficient amount of NaOH were added to give a pH value of 7.0. To the resulting mixture was further added water to give a volume of 500 ml.

A 50 ml fraction of the resulting aqueous solution was combined with NaOH and water to give a total volume of 100 ml. The pH value of the solution was 14.0.

The solution was reacted under agitation at 250°C for three hours in a hermetically closed autoclave type reaction vessel. The white precipitates resulting from the reaction were subjected to repeated decantation to remove impurities such as alkali ions. The thus refined product was then washed with water and dried overnight at 100°C.

Using the above described procedures, fine particles of lead zirconate were synthesized with the use of various pH values for the wet reaction, and the resultant lead zirconate particles were analyzed by X-ray diffraction. The results are shown in Table 1.

Table 1

| Nos. | pH | Results of X-ray diffraction |
|---|---|---|
| 1 | 13.3 | amorphous |
| 2 | 13.7 | fine particles of $PbZrO_3$ |
| 3 | 14.0 | fine particles of $PbZrO_3$ |
| 4 | 14.3 | fine particles of $PbZrO_3$ |
| 5 | 14.5 | amorphous |

The diffraction pattern of the fine particles produced at pH values equal to 13.3 and 14.5 was rather broad without any notable diffraction peaks unlike the pattern of the fine particles of lead zirconate shown in FIG. 5 so that a majority of these particles may be assumed to be in an amorphous state. The fine particles obtained with pH values of 13.7, 14.0 and 14.3 were also analyzed by X-ray diffraction. The diffraction pattern of these particles could be wholly identified with that of the lead zirconate shown in FIG. 3, while the SEM photo of these particles showed that they are crystals of the same shape and size as those of the crystals shown in FIG. 6. Hence, these particles were identified as lead zirconate of the orthrhombic phase.

## Claims

1. A method for producing a fine powder of lead zirconate which comprises preparing an aqueous solution containing a hydrolysis product of a zirconium compound or a water-soluble zirconium salt, **characterized by** reacting said aqueous solution with a water-soluble lead compound in an aqueous alkaline solution having a pH between 13.5 and 14.4 in an autoclave at a reaction temperature of at least 175°C to produce a precipitate, and filtering and washing the resulting precipitate.

2. A method according to claim 1 wherein said reaction temperature is at least 200°C.

3. A method according to claim 1 wherein the molecular ratio of lead to zirconium in said solution is between 0.7 and 2.0.

4. A method according to claim 3 wherein the said molecular ratio of lead to zirconium is between 1.0 and 1.7.

## Revendications

1. Un procédé pour produire une poudre fine de zirconate de plomb qui comprend la préparation d'une solution aqueuse contenant un produit d'hydrolyse d'un composé de zirconium ou un sel de zirconium soluble dans l'eau, caractérisé en ce que l'on fait réagir ladite solution aqueuse avec un composé de plomb soluble dans l'eau dans une solution alcaline aqueuse ayant un pH compris entre 13,5 et 14,4 dans un autoclave à une température de réaction d'au moins 175°C pour produire un précipité et on filtre et on lave le précipité résultant.

2. Un procédé selon la revendication 1 dans lequel ladite température de réaction est d'au moins 200°C.

3. Un procédé selon la revendication 1 dans lequel le rapport moléculaire du plomb au zirconium dans ladite solution est compris entre 0,7 et 2,0.

4. Un procédé selon la revendication 3 dans lequel ledit rapport moléculaire du plomb au zirconium est compris entre 1,0 et 1,7.

## Patentansprüche

1. Verfahren zur Herstellung eines feinen Pulvers aus Bleizirkonat, umfassend die Herstellung einer wäßrigen Lösung, die ein Hydrolyseprodukt einer Zirkoniumverbindung oder ein wasserlösliches Zirkoniumsalz enthält, **dadurch gekennzeichnet,** daß man die wäßrige Lösung mit einer wasserlöslichen Bleiverbindung in einer wäßrigen alkalischen Lösung mit einem pH-Wert zwischen 13,5 und 14,4 in einem Autoklaven bei einer Reaktionstemperatur von mindestens 175°C umsetzt, um einen Niederschlag zu bilden, und daß man den resultierenden Niederschlag filtriert und wäscht.

2. Verfahren nach Anspruch 1, worin die Reaktionstemperatur mindestens 200°C beträgt.

3. Verfahren nach Anspruch 1, worin das molare Verhältnis von Blei zu Zirkonium in der Lösung zwischen 0,7 und 2,0 liegt.

4. Verfahren nach Anspruch 3, worin das molare Verhältnis von Blei zu Zirkonium zwischen 1,0 und 1,7 liegt.

## FIG. 1

## FIG.2

EP 0 200 176 B1

FIG.3

FIG.4

FIG.5

FIG.6